# EUROPÄISCHE PATENTSCHRIFT

(11) **EP 3 121 098 B1**
(45) Veröffentlichungstag und Bekanntmachung des Hinweises auf die Patenterteilung: **29.08.2018**
(21) Anmeldenummer: 16001623.4
(22) Anmeldetag: 25.07.2016
(51) Int. Cl.: A45C 3/02, A45C 13/12, B62J 7/08, B62J 9/00

(54) **GEPÄCKSTÜCK EINES FAHRRAD-GEPÄCKTRÄGERSYSTEMS**
BAGGAGE SECTION OF A BICYCLE BAGGAGE CARRIER SYSTEM
BAGAGE D'UN SYSTEME DE PORTE-BAGAGE DE VELO

(30) Priorität: 23.07.2015 DE 102015112043
(43) Veröffentlichungstag der Anmeldung: 25.01.2017
(73) Patentinhaber: tubus carrier systems GmbH, 48157 Münster (DE)
(72) Erfinder: Ronge, Peter, 48145 Münster (DE)
(74) Vertreter: Habbel, Ludwig

(56) Entgegenhaltungen:
- WO-A2-2011/116757
- DE-U1- 29 802 422
- DE-U1-202008 015 715

## Beschreibung

Die Erfindung betrifft ein Gepäckstück eines Fahrrad-Gepäckträgersystem nach dem Oberbegriff des Anspruchs 1.

Gattungsgemäße Gepäckstücke sind aus der Praxis bekannt und beispielsweise unter der Marke "Racktime" als so genannte Fahrradtaschen handelsüblich. Zwei Haken können eine obere, liegende Strebe eines Gepäckträgers umgreifen und das Gepäckstück daran halten.

Ein solches Gepäckstück mit den Merkmalen des Oberbegriffs des Anspruchs 1 ist aus dem Dokument WO 2011/116757 A2 bekannt, das als nächstliegender Stand der Technik angesehen wird.

Die Haken weisen jeweils zwei Abschnitte auf: erstens einen starren, nach unten offenen Außenhaken, der sich von der Wand des Gepäckstücks weg erstreckt, so dass das Gepäckstück mit diesem Außenhaken auf eine liegend verlaufende Strebe eines Gepäckträgers aufgesetzt werden kann und dann an dieser Strebe hängend gehalten ist. Als ein zweiter Abschnitt ist allerdings ein Innenhaken vorgesehen, welcher der Wand des Gepäckstücks näher ist und gegenüber dem starren Außenhaken schwenkbeweglich ist. Federbelastet nimmt der Innenhaken eine dem Außenhaken nahe so genannte Haltestellung ein, die den nach unten offenen Außenhaken für die Strebe verschließt, so dass Außen- und Innenhaken letztlich eine Art Öse bilden, welche die Strebe über mehr als 180° ihres Querschnitts umgreifen kann. Eine Montage des Gepäckstücks an der Strebe ist daher zunächst noch nicht möglich.

Durch ein Zugelement kann gegen die Wirkung der Feder der Innenhaken vom Außenhaken weg geschwenkt werden, also aus seiner Haltestellung in eine so genannte Aufnahmestellung, so dass an dem nach unten offenen Außenhaken nun ein Spalt entsteht, der breiter ist als die erwähnte Strebe des Gepäckträgers. Das Gepäckstück kann nun auf den Gepäckträger abgesenkt werden, bis der Außenhaken auf der Strebe aufliegt. Anschließend wird das Zugelement entlastet, so dass der Innenhaken durch die Federkraft zurück bewegt wird, bis die Strebe um mehr als 180° von den beiden Abschnitten des Hakens umfasst ist. Auf diese Weise ist das Gepäckstück gegen Kräfte gesichert, die in jeder radialen Richtung, bezogen auf die Strebe, angreifen - beispielsweise gegen abhebende Kräfte. Das Gepäckstück ist nun lediglich in Längsrichtung der Strebe beweglich und jedenfalls verliersicher am Gepäckträger gehalten.

Der Erfindung liegt die Aufgabe zugrunde, ein gattungsgemäßes Gepäckstück dahingehend zu verbessern, dass dieses einen hohen Tragekomfort ermöglicht, wenn es nicht am Gepäckträger befestigt ist, sondern wenn es vielmehr als Handgepäck getragen wird.

Diese Aufgabe wird durch ein Gepäckstück mit den Merkmalen des Anspruchs 1 gelöst. Vorteilhafte Ausgestaltungen sind in den Unteransprüchen beschrieben.

Die Erfindung schlägt mit anderen Worten vor, auch den Außenhaken beweglich zu lagern, so dass er aus der von der Wand beabstandeten, oben beschriebenen Aufnahme- und Haltestellung in eine zusätzliche, so genannte Tragestellung beweglich ist. In dieser Tragestellung ist das freie Ende des Außenhakens weniger weit von der Wand des Gepäckstücks entfernt als in der Aufnahme- bzw. Haltestellung. Das freie Ende des Außenhakens befindet sich in der Tragestellung etwa in der Ebene der Wand des Gepäckstücks oder taucht sogar in das Gepäckstück ein, so dass dieses freie Ende des Außenhakens innerhalb der vom Gepäckstück umschlossenen Kontur angeordnet ist. Durch die vorschlagsgemäße Ausgestaltung des Hakens wird vermieden, dass der Außenhaken sich beispielsweise der Kleidung des Benutzers verfängt, wenn dieser das Gepäckstück als Handgepäck trägt. In der Tragestellung wird vermieden, dass der Haken, insbesondere dessen Außenhaken, regelrecht einen offenen Fanghaken bildet, so dass der Tragekomfort des Gepäckstücks deutlich erhöht ist, wenn sich der Außenhaken in der Tragestellung befindet.

Beispielsweise kann der Außenhaken an einer Schrägführung entlang in die Tragstellung oder in die weiter vor die Wand des Gepäckstücks vorstehende Aufnahme- bzw. Haltestellung bewegt werden. Bei dieser Bewegung erfolgt eine Bewegungskomponente in der Ebene der Wand, und eine zweite, überlagerte Bewegungskomponente quer dazu.

Oder der Außenhaken kann um eine Schwenkachse schwenkbeweglich gelagert sein, so dass sein freies Ende dementsprechend unterschiedliche Abstände zur Wand des Gepäckstücks aufweist.

Oder der Außenhaken kann wie bei einem für Möbeltüren bekannten Druck-Rast-Beschlag nach innen, in das Gepäckstück hinein, gedrückt werden und verbleibt dort eingerastet in der Tragestellung. Nach erneutem Druck auf den Haken bzw. dessen Außenhaken wird die Raste gelöst und der Außen haken wieder aus dem Gepäckstück heraus in die Aufnahme- bzw. Haltestellung bewegt, in der das freie Ende des Außenhakens von der Wand des Gepäckstücks nun wieder weiter beabstandet ist.

Es kann vorgesehen sein, dass der Haken insgesamt vollständig in die Kontur des übrigen Gepäckstücks eintaucht, so dass eine möglichst glattflächige Außenkontur an der Wand geschaffen wird, an welcher sich der Haken befindet. Aber selbst wenn der Außenhaken nicht vollständig in die Kontur des Gepäckstücks eintauchen kann, sondern vielmehr in der Tragestellung ein nach außen über die übrige Kontur des Gepäckstücks ragender Überstand verbleibt, wird dennoch der Tragekomfort des Gepäckstücks erheblich verbessert, indem nämlich das freie Ende des Außenhakens in der Tragestellung nicht mehr den erwähnten "offenen Fanghaken" bildet.

Vorteilhaft kann vorgesehen sein, den Innenhaken und den Außenhaken um dieselbe Schwenkachse schwenkbeweglich zu lagern. Auf diese Weise wird eine platzsparende und preisgünstige Ausgestaltung des Hakens unterstützt, die mit wenigen Bauteilen auskommt.

Vorteilhaft kann in an sich bekannter Weise vorgesehen sein, dass der Innenhaken federbelastet an dem Außenhaken anliegt und dass er gegen die Federwirkung aus dieser anliegenden Stellung, die er in der Halte- und in der Tragestellung einnimmt, in die Aufnahmestellung bewegt werden kann. Eine einfache Betätigung zur Überwindung der Federkraft kann dabei in an sich bekannter Weise mittels eines Zugseils bzw. Zugbandes ermöglicht werden, so dass eine unkomplizierte, einfache und schnelle Handhabung des Gepäckstücks ermöglicht wird, wenn dieses an dem Gepäckträger befestigt werden soll bzw. von dem Gepäckträger abgenommen werden soll und dazu jeweils der Haken geöffnet werden soll, also der Innenhaken in seine Aufnahmestellung bewegt werden soll.

Vorteilhaft kann vorgesehen sein, das Gepäckstück an einer oberen, liegend verlaufenden Strebe des Gepäckträgers zu befestigen. Dies erleichtert die Handhabung des Gepäckstücks beim Aufsetzen auf den Gepäckträger und bei der Entnahme vom Gepäckträger, da diese obere Strebe gut einsehbar ist und insofern das Gepäckstück auf einfache Weise zielsicher am Gepäckträger positioniert werden kann. Zu diesem Zweck kann vorteilhaft im oberen Bereich des Gepäckstücks die Anordnung von zwei Haken vorgesehen sein, die miteinander fluchten, so dass sie gemeinsam an derselben Strebe des Gepäckträgers festgelegt werden können.

Vorteilhaft kann vorgesehen sein, dass von diesen beiden erwähnten Haken wenigstens einer verschiebbar an der Wand des Gepäckstücks befestigt ist, so dass der Abstand zwischen den beiden Haken verändert werden kann und somit an die jeweilige Gepäckträgerkonstruktion angepasst werden kann, um optimal geeignete Befestigungsstellen des jeweiligen Gepäckträgers nutzen zu können und etwaigen Hindernissen auszuweichen, wie Querstreben o. dgl., und somit eine problemlose Festlegung der Haken an dem Gepäckträger zu ermöglichen.

Um bei einem derart verschiebebeweglichen Haken zu vermeiden, dass dieser jedes Mal neu in seine gewünschte Position gebracht werden muss, wenn das Gepäckstück an einem Gepäckträger befestigt wird, kann vorteilhaft vorgesehen sein, den verschiebbaren Haken in unterschiedlichen Schiebestellungen zu arretieren. Dies kann auf einfache Weise durch Exzenterklemmhebel, Schraubverbindungen o, dgl. erfolgen, so dass das Gepäckstück einmal an einen bestimmten Gepäckträger angepasst werden kann und dann stets ohne nachträgliche Justage problemlos mit diesem Gepäckträger bzw. einem baugleichen Gepäckträger verbunden werden kann. Zur Anpassung an einen anderen Gepäckträger kann auf einfache Weise die entsprechende Arretierung gelöst werden und der verschiebbare Haken in einer anderen Schlebestellung erneut arretiert werden.

Vorteilhaft kann vorgesehen sein, dass im unteren Bereich des Gepäckstücks ebenfalls ein Haken angeordnet ist und dieser Haken so ausgerichtet ist, dass er eine aufrecht verlaufende Strebe umgreift, beispielsweise eine Stützstrebe des Gepäckträgers, die vom Bereich der Radnabe des Fahrrades nach oben verläuft. Dadurch, dass das Gepäckstück auch in seinem unteren Bereich am Gepäckträger festgelegt wird, wird das Gepäckstück zuverlässig an Pendel- oder Schwenkbewegungen gehindert, bei denen es ansonsten um die erwähnte obere Strebe wie um eine Schwenkachse beweglich wäre.

Dadurch, dass untere und obere Haken vorgesehen sind, kann das Gepäckstück auf unterschiedliche Arten am Gepäckträger gehalten werden: Beispielsweise können zwei untere Haken vorgesehen sein, die insbesondere an zwei V-förmig zueinander verlaufenden aufrechten Streben des Gepäckträgers abstützen können, um das Gewicht des Gepäckstücks zu tragen. Obere Haken können dann dazu dienen, lediglich ergänzend ggf. einen Anteil des Gewichts ebenfalls zu tragen, und sie dienen ansonsten insbesondere dazu, eine Kippbeweglichkeit des Gepäckstücks auszuschließen und vielmehr das Gepäckstück auch in dessen oberen Bereich am Gepäckträger zu halten und gegen Bewegungen in seitlicher Richtung, quer zur Längsrichtung des Fahrrades, zu sichern. Als Alternative dazu, das Gepäckstück hauptsächlich in seinen unteren Bereich am Gepäckträger abzustützen, kann vorgesehen sein, das Gepäckstück in an sich bekannter Weise nahezu vollständig an seinem einen oder mehreren oberen Haken aufzuhängen und im unteren Bereich einen oder mehrere Haken nur zu dem Zweck vorzusehen, die erwähnten Pendel- bzw. Schwenkbewegungen des Gepäckstücks in seinem unteren Bereich zu vermeiden, die ansonsten quer zur Längsrichtung des Fahrzeugs in seitlicher Richtung auftreten könnten.

Vorteilhaft kann vorgesehen sein, dass die Wand des Gepäckstücks, an welcher der Haken vorgesehen ist, einen Formbereich aufweist, so dass die Wand nicht nur glattflächig und im Wesentlichen in einer einzigen Ebene verläuft, sondern vielmehr dieser Formbereich eine Einbuchtung bildet, die in das Innere des Gepäckstücks ragt. Der Haken ist zumindest teilweise innerhalb dieser Einbuchtung angeordnet, so dass das Maß, um welches der Haken über die Außenkontur des übrigen Gepäckstücks nach außen ragt, möglichst klein gehalten werden kann. Hierdurch wird der Tragekomfort des Gepäckstücks weiter verbessert.

Dieser erwähnte Formbereich des Gepäckstücks kann vorteilhaft als separates Formstück ausgestaltet sein, welches an der Wand befestigt ist. Hierdurch kann eine Vormontage erfolgen, indem der Haken zunächst mit dem Formstück verbunden wird und diese vormontierte Baugruppe dann mit der Wand des Gepäckstücks verbunden wird, so dass eine möglichst schnelle und somit wirtschaftliche Fertigung des Gepäckstücks unterstützt wird. Zudem wird eine einfache und preisgünstige Herstellung des Gepäckstücks ermöglicht, da dieses nicht in einem komplizierten Formwerkzeug insgesamt hergestellt zu werden braucht, sondern bei welcher vielmehr lediglich das separat hergestellte Formstück mit dem übrigen Gepäckstück verbunden wird, indem es an der Wand befestigt wird.

Beispielsweise kann das Gepäckstück aus einem textilen Material bestehen, so dass die Wand, an welcher der Haken angeordnet ist, mit einem Einschnitt oder einer Aussparung versehen wird, in welche dann das Formstück eingesetzt und ringsum mit diesem textilen Wandmaterial verbunden werden kann, beispielsweise verklebt oder durch Ultraschall verschweißt werden kann. Oder die Wand ist mehrschichtig aufgebaut und weist eine äußere, beispielsweise textile, Außenschicht auf sowie eine innere formstabile Schicht. Die formstabile Schicht stellt erstens eine Formstabilität des Gepäckstücks auch im ungefüllten Zustand sicher und erleichtert somit dessen Beladung. Zweitens weist die formstabile Schicht die Einbuchtung auf, welche die Haken trägt, und sie leitet die Tragekräfte großflächig und damit materialschonend in das Gepäckstück ein, z. B. durch eine großflächige Verbindung der formstabilen Schicht mit der Außenschicht.

Vorteilhaft kann das Formstück als Tiefziehteil oder als Spritzgussteil ausgestaltet sein. Dies ermöglicht beispielsweise eine Herstellung aus Kunststoff mit einer hervorragenden Witterungsbeständigkeit und mit guten mechanischen Eigenschaften, so dass selbst ein voll beladenes Gepäckstück problemlos und sicher am Gepäckträger gehalten werden kann.

Der erwähnte Haken, der im unteren Bereich des Gepäckstücks vorgesehen sein und daher als unterer Haken bezeichnet werden kann, kann vorteilhaft entlang einer Führungsbahn beweglich sein, so dass er an unterschiedliche Gepäckträgergeornetrien angepasst werden kann. Dabei ist vorgesehen, diesen unteren Haken in unterschiedlichen Stellungen jeweils zu arretieren, die er entlang der Führungsbahn einnehmen kann, so dass ähnlich wie weiter oben für die oberen Haken erwähnt auch der untere Haken einmalig an einen bestimmten Gepäckträgertyp angepasst werden kann und anschließend dementsprechend problemlos und sicher ohne weitere Justage immer wieder an diesem Gepäckträgertyp festgelegt werden kann.

Die erwähnte Führungsbahn, entlang welcher der untere Haken beweglich ist, kann vorteilhaft gebogen verlaufen, beispielsweise einen annähernd elliptischen oder halbelliptischen Verlauf aufweisen, Hierdurch kann der untere Haken optimal an unterschiedlich schräg verlaufende, aufrecht ausgerichtete Streben des Gepäckträgers angepasst werden. Alternativ oder auch zusätzlich dazu kann vorgesehen sein, den unteren Haken um eine Achse schwenkbeweglich zu lagern, die senkrecht zur Wand des Gepäckstücks verläuft, so dass auch hierdurch unterschiedliche Winkelstellungen des unteren Hakens in Anpassung an unterschiedliche Schrägverläufe aufrechter Streben möglich sind.

Der untere Haken kann identisch wie ein oberer Haken ausgestaltet sein. Alternativ kann jedoch vorgesehen sein, dass der untere Haken im Gegensatz zu einem oberen Haken eine Strebe des Gepäckträgers nicht umfasst, sondern dieser nur von einer Seite anliegt. Hierdurch ist die Tasche gegen ein Aufschaukeln gesichert, also ausreichend sicher in ihrem unteren Bereich am Gepäckträger gehalten, und gleichzeitig ist eine vorteilhaft einfache Konstruktion des unteren Hakens möglich, indem dieser beispielsweise nur einen Außenhaken aufweist und ein Innenhaken entfällt, so dass auch keine Betätigung des Innenhakens erforderlich wird und somit auch die Handhabung des unteren Hakens besonders einfach möglich ist.

Wie ein oberer Haken ist auch der untere Haken vorteilhaft in einer Vertiefung gelagert - beispielsweise indem die erwähnte Führungsbahn diese Vertiefung bildet. Der untere Haken kann in seiner Tragestellung entweder ganz oder immerhin annähernd vollständig in die Vertiefung eintauchen, sofern er sich in Längsrichtung Vertiefung erstreckt. Je nachdem, wie die Strebe des Gepäckträgers verläuft, an welche der untere Haken angelegt werden soll, kann er zwischen seiner Aufnahme- bzw. Haltestellung und seiner Tragestellung hin und her bewegt werden, ohne dass seine grundsätzliche Ausrichtung zu der Vertiefung bzw. Führungsbahn geändert werden muss.

Wird der untere Haken jedoch dergestalt auf den Gepäckträger eingestellt, dass er sich nicht in Längsrichtung der Vertiefung erstreckt, sondern in seiner Aufnahme- bzw. Haltestellung winklig dazu ausgerichtet ist, z. B. in einem Winkel von etwa 45 bis 90 Grad, ragt er über die Vertiefung hinaus. Um den unteren Haken in die Tragestellung zu bewegen, wird er mittels Handkraft an die Taschenrückseite angedrückt. Dadurch wird wie an den oberen Haken erreicht, dass in der Tragestellung nur eine geringfügige und zudem flach verlaufende Erhebung über die Taschenrückseite vorsteht.

Der untere Haken kann vorteilhaft wenigstens schwenkbar oder sogar um volle 360 Grad frei drehbar um eine Achse gelagert sein, die senkrecht zur Wand des Gepäckstücks verläuft, so dass er optimal an den Gepäckträger angepasst werden kann.

Beispielsweise kann eine so genannte Arretierung vorgesehen sein, die entlang der erwähnten Führungsbahn beweglich und an unterschiedlichen Stellen arretiert werden kann. Diese Arretierung trägt ähnlich wie eine Sockelplatte den Außenhaken. Der Außenhaken kann an der Arretierung schwenkbeweglich gelagert sein, um in die unterschiedlichen Aufnahme- bzw. Halte- und die Tragestellung bewegt werden zu können. Und er kann relativ zu der Arretierung oder gemeinsam mit der Arretierung um die erwähnte Achse schwenk- oder drehbar gelagert sein, um auf diese Weise unterschiedliche Winkelstellungen relativ zu der Vertiefung bzw. Führungsbahn einnehmen zu können.

Ausführungsbeispiele der Erfindung werden anhand der rein schematischen Darstellungen nachfolgend näher erläutert. Dabei zeigt
- Fig. 1: eine perspektivische Ansicht auf ein erstes Ausführungsbeispiel eines Gepäckstücks,
- Fig. 2: in gegenüber Fig. 1 vergrößertem Maßstab einen Schnitt durch das Gepäckstück im Bereich eines oberen Hakens, der sich in der Tragestellung befindet,
- Fig. 3: zeichnerisch weiter vereinfacht eine Ansicht ähnlich Fig. 2, wobei sich der Haken in seiner Haltestellung befindet, und
- Fig. 4: eine Ansicht ähnlich Fig. 3, wobei sich der Haken in seiner Aufnahmestellung befindet, und
- Fig. 5: eine perspektivische Ansicht auf ein zweites Ausführungsbeispiel eines unteren Hakens, der sich in der Tragestellung befindet.

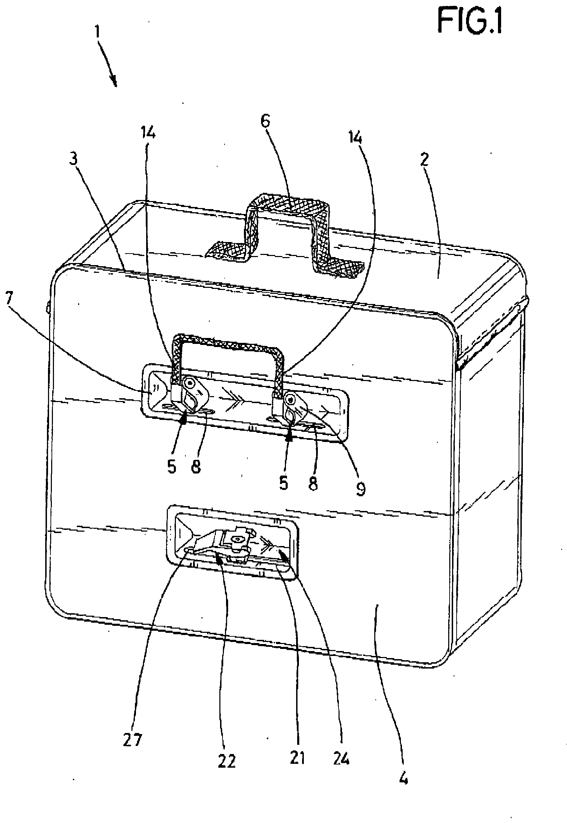

In Fig. 1 ist mit 1 insgesamt ein Gepäckstück bezeichnet, welches als eine so genannte Kappentasche ausgestaltet ist. Das Gepäckstück 1 weist daher eine obere Kappe 2 auf, welche eine obere Öffnung des Gepäckraums überdeckt und welche um eine Scharnierachse 3 schwenkbar ist. Das Gepäckstück 1 besteht im Wesentlichen aus textilem Material, so dass die Scharnierachse 3 durch dieses Material selbst gebildet ist und nicht durch ein separates Scharnierbauteil, Auf der Kappe 2 ist ein Tragegriff 6 vorgesehen, so dass das Gepäckstück 1 als Handgepäck getragen werden kann.

Unterhalb der Scharnierachse 3 weist das Gepäckstück 1 eine rückwärtige Wand 4 auf, an der drei Haken 5 und 22 angeordnet sind. Die beiden oberen Haken 5 sind an einem Formstück 7 befestigt, welches eine Vertiefung bzw. Einbuchtung aufweist, und welches als Tiefziehteil separat hergestellt worden und mit der übrigen Wand 4 verbunden worden ist. Dabei kann das Formstück 7 unmittelbar mit dem textilen Material der Wand 4 verbunden sein oder mit einer in das Gepäckstück 1 eingesetzten, in der Zeichnung nicht ersichtlichen Verstärkungsplatte, die unmittelbar hinter der Wand 4 im Gepäckstück 1 angeordnet ist, oder die erwähnte Verstärkungsplatte kann insgesamt das Formstück 7 bilden und in einem oberen Bereich die erwähnte Vertiefung aufweisen.

Im Formstück 7 sind zwei Langlöcher 8 vorgesehen, wobei jeder der beiden oberen Haken 5 in jeweils einem dieser beiden Langlöcher 8 geführt ist, so dass sowohl der Abstand der beiden Haken 5 zueinander veränderlich ist als auch die beiden Haken 5 bei gleichbleibendem Abstand in den Langlöchern 8 verschoben werden können, um eine optimale Befestigungsposition der Haken 5 in Anpassung an den jeweils verwendeten Gepäckträger zu ermöglichen.

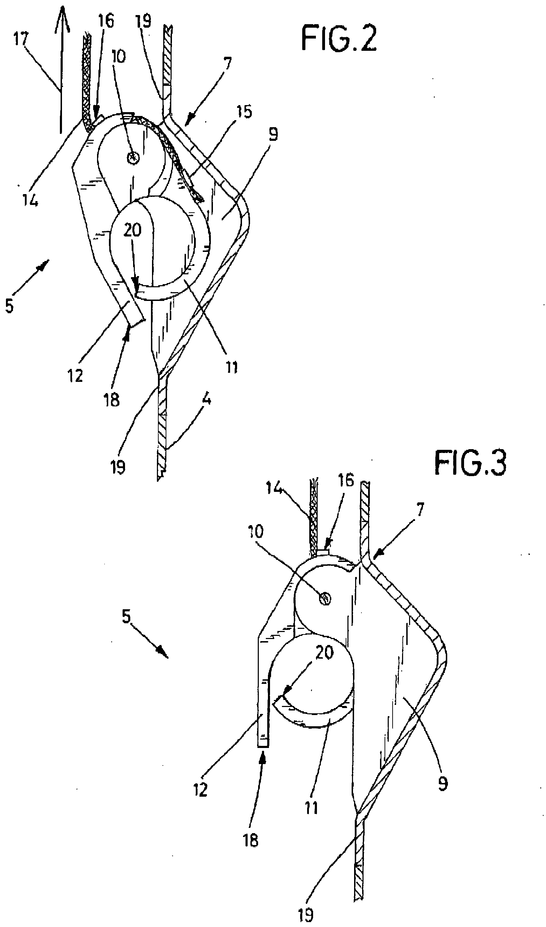

Fig. 2 zeigt einen Querschnitt durch das Formstück 7 und einen darin angeordneten Haken 5. Tragwände 9 erstrecken sich quer durch die von dem Formstück 7 geschaffene Vertiefung. Abgesehen davon, dass die Tragwände 9 das Formstück 7 aussteifen, ist zwischen zwei Tragwänden 9 zudem eine Scharnierachse 10 gehalten. Jeweils zwei Tragwände 9 und eine dazwischen gehaltene Scharnierachse 10 sind Teile eines Sockels, der auch als Arretierung bezeichnet werden kann, weil dieser Sockel in Längsrichtung des Formstücks 7 verschiebbar und in unterschiedlichen Stellungen festgelegt werden kann. Jeder obere Haken 5 weist einen solchen Sockel bzw. eine solche Arretierung auf.

Sowohl ein als Innenhaken 11 bezeichneter Abschnitt als auch ein als Außenhaken 12 bezeichneter Abschnitt des oberen Hakens 5 sind jeweils schwenkbeweglich an der Scharnierachse 10 gelagert. Am Innenhaken 11 ist ein textiles Zugelement 14 mittels eines Befestigungselements wie beispielsweise einer Schraube 15 festgelegt. Das Zugelement 14 verläuft von dort an der Oberfläche des Innenhakens 11 entlang und anschließend an der Oberfläche des Außenhakens 12 entlang um die Scharnierachse 10 herum und taucht anschließend, nachdem es unter einem Bügel 16 her verläuft, nach außen auf.

Wenn an dem Zugelement 14 in Richtung eines in Fig. 2 dargestellten Richtungspfeils 17 gezogen wird, so wird der Bügel 16 und mit ihm der gesamte Außenhaken 12 um die Scharnierachse 10 geschwenkt, so dass sich der Abstand eines freien Endes 18 des Außenhakens 12 von einer Randfläche 19 des Formstücks 7 entfernt, wobei diese Randfläche 19 die Vertiefung des Formstücks 7 ringsum umgibt. Bei dem dargestellten Ausführungsbeispiel besteht das Formstück 7 nur aus der Vertiefung und der diese Vertiefung umgebenden Randfläche 19, die zur Verbindung des Formstücks 7 mit dem textilen Material der Wand 4 dient.

In Fig. 2 nimmt der Außenhaken 12 seine so genannte Tragestellung ein, in welcher sein freies Ende 18 sich nahe der Wand 4 bzw. der Randfläche 19 befindet, so dass dieser Außenhaken 12 in der Tragestellung nicht als ein offener Fanghaken wirkt, der sich in unerwünschter Weise verfangen kann.

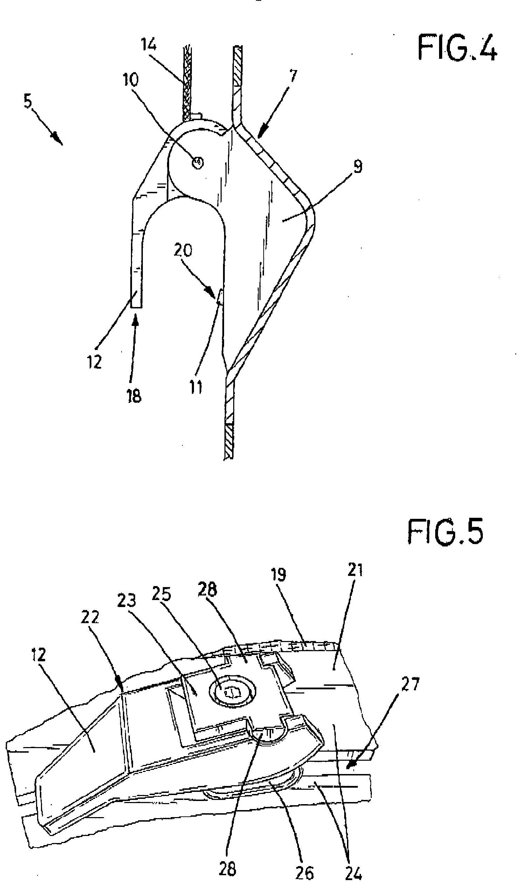

Durch den Zug am Zugelement 14 wird der Außenhaken 12 aus seiner Tragestellung bis in eine aus Fig. 3 ersichtliche Stellung geschwenkt, in welcher er einem Anschlag anliegt und die er als Halte- oder Aufnahmestellung einnimmt. Während Fig. 2 die Ausgestaltung des Formstücks 7 und des darin angeordneten Hakens 5 zwar schematisch, aber vergleichsweise detailliert zeigt, sind in den Fig. 3 und 4 lediglich die relevanten Elemente der Haken 5 und des Formstücks 7 dargestellt, um lediglich die unterschiedlichen Stellungen der beweglichen Bauteile wie des Innenhakens 11, des Außenhakens 12 und des Zugelements 14 zu verdeutlichen. In dieser Stellung der Fig. 3 ist die Öse, welche der Innenhaken 11 und der Außenhaken 12 bilden, nach wie vor geschlossen, so dass Fig. 3 die Haltestellung des Hakens 5 zeigt und in diesem Zustand das Gepäckstück 1 noch nicht am Gepäckträger eines Fahrrads befestigt werden kann.

Ein weiterer Zug am Zugelement 14 führt nicht zu einer weiteren Bewegung des Außenhakens 12, da dieser dem erwähnten Anschlag anliegt. Jedoch führt der weitere Zug am Zugelement 14 dazu, dass der Innenhaken 11 relativ zu dem Außenhaken 12 bewegt wird, indem der Innenhaken 11 weiter um die Scharnierachse 10 geschwenkt und dabei die Schraube 15 näher an den Bügel 16 herangezogen wird. Ein freies Ende 20 des Innenhakens 11 wird so vom freien Ende 18 des Außenhakens 12 entfernt, bis sich auch der Innenhaken 11 in der Aufnahmestellung befindet und somit der Haken 5 insgesamt seine Aufnahmestellung einnimmt, die aus Fig. 4 ersichtlich ist. In dieser Aufnahmestellung kann der Haken 5 auf einen Gepäckträger eines Fahrrads abgesenkt werden, so dass eine liegende Strebe des Gepäckträgers in den Zwischenraum zwischen dem Innenhaken 11 und dem Außenhaken 12 eintauchen kann.

Wird anschließend das Zugelement 14 wieder entlastet, so schwenkt der Innenhaken 11 federbelastet um die Scharnierachse 10 zurück, bis sein freies Ende 20 sich in der Nähe des Außenhakens 12 befindet. Der Haken 5 befindet sich nun wieder in seiner aus Fig. 3 ersichtlichen Haltestellung und schafft eine Öse, welche die Strebe des Gepäckträgers um mehr als 180° umschließt.

Wenn das Gepäckstück 1 später vom Gepäckträger des Fahrrads entnommen werden soll, wird das Zugelement 14 erneut betätigt, um den Innenhaken 11 und somit den Haken 5 insgesamt in die Aufnahmestellung gemäß Fig. 4 zu bringen. Nun kann das Gepäckstück 1 vom Gepäckträger abgehoben werden. Wird anschließend das Zugelement 14 entlastet, so schwenkt der Innenhaken 11 federbelastet wieder gegen den Außenhaken 12 zurück in die aus Fig. 3 ersichtliche Stellung.

Um einen störenden Überstand des Hakens 5 in dieser aus Fig. 3 ersichtlichen Haltestellung zu vermeiden, wenn das Gepäckstück 1 als Handgepäck getragen werden soll, können nun der Innenhaken 11 und der Außenhaken 12 um die Scharnierachse 10 geschwenkt werden, wobei der Innenhaken 11 und der Außenhaken 12 relativ zueinander ihre Stellung beibehalten, jedoch gemeinsam um die Schwenkachse 10 geschwenkt werden, bis sie die aus Fig. 2 ersichtliche Transportstellung einnehmen.

Abweichend von dem beschriebenen Ausführungsbeispiel kann der Haken 5 auch durch eine zweite Feder belastet sein, die den Haken 5 in seiner Tragestellung zu halten bestrebt ist. Durch das Zugelement 14 wird in diesem Fall zunächst der Haken 5 insgesamt gegen die Wirkung der zweiten Feder aus der Tragestellung in die Haltestellung gebracht, und anschließend durch weiteren Zug der Innenhaken 11 gegen die Wirkung der ersten Feder in die Aufnahmestellung weiter geschwenkt.

Gegebenenfalls kann abweichend von dem dargestellten Ausführungsbeispiel am Haken 5 zwar nur eine einzige Feder vorgesehen sein, die jedoch wie die beiden vorerwähnten Federn wirkt: sie drängt zunächst den Innenhaken 11 aus der Aufnahmestellung in die Haltestellung und weiter dann sowohl den Innenhaken 11 als auch den Außenhaken 12 gemeinsam bis in die Tragestellung. Durch das Zugelement 14 wird in diesem Fall gegen die Wirkung der einzigen Feder der Haken 5 zweistufig geöffnet, indem er in der ersten Stufe in die Haltestellung gebracht und anschließend in der zweiten Stufe geöffnet wird, indem der Innenhaken 11 noch weiter bewegt wird.

Bei dem dargestellten Ausführungsbeispiel bildet der Bügel 16 aus Gründen der besseren Anschaulichkeit einen über die Außenkontur des übrigen Außenhakens 12 vorstehenden Vorsprung. Abweichend davon kann der Bügel 16 am Außenhaken 12 bündig in dessen Umfangskontur integriert sein, so dass das Zugelement 14 teilweise innerhalb des Außenhakens 12 verläuft, und so dass eine stabile Konstruktion sowie eine störungsfreie Bewegbarkeit des Außenhakens 12 durch eine möglichst glattflächige Außenkontur unterstützt ist.

Anhand von Fig. 1 ist ersichtlich, dass die beiden Zugelemente 14 der beiden oberen Haken 5 zu einem gemeinsamen Griff verbunden sind. Ein Zug an diesem Griff bewirkt die gleichzeitige Betätigung beider Zugelemente 14 und somit eine besonders einfache Handhabung der beiden oberen Haken 5, wenn diese insgesamt aus ihrer Transportstellung gemäß Fig. 2 in ihre Haltestellung gemäß Fig. 3 geschwenkt werden sollen oder wenn anschließend darüber hinaus die Innenhaken 11 noch weiter in ihre Aufnahmestellung gemäß Fig. 4 geschwenkt werden sollen.

Bei dem dargestellten Ausführungsbeispiel ist in Fig. 1 aus Gründen der zeichnerischen Vereinfachung der untere Haken 22 an einem unteren Formstück 21 dargestellt, welches geradlinig verläuft und insofern dem oberen Formstück 7 ähnlich ist. Der untere Haken 22 ist an dem Formstück 21 längsbeweglich und arretierbar befestigt, ähnlich wie dies anhand des Formstücks 7 für die oberen Haken 5 erläutert wurde. Auch der untere Haken 22 kann somit großteils in eine Vertiefung des Formstücks 21 versenkt werden und eine Tragestellung einnehmen. Der untere Haken 22 kann genauso ausgestaltet sein wie ein oberer Haken 5. Er kann jedoch davon abweichen, wie in Fig. 1 ersichtlich und anhand von Fig. 5 näher erläutert wird:

Fig. 5 zeigt ein zweites Ausführungsbeispiel eines unteren Hakens 22, welches lediglich einen schwenkbeweglichen Außenhaken 12 aufweist und keinen Innenhaken 11. In diesem Fall dient ein Zugelement des unteren Hakens 22 lediglich dazu, den unteren Haken 22 aus seiner Tragestellung in die Haltestellung zu bewegen. Ohne Innenhaken 11 stellt die Haltestellung auch gleichzeitig die Aufnahmestellung dar, in welcher der Haken 22 an eine Strebe angesetzt werden und diese aufnehmen kann. Eine Betätigung, um den unteren Haken 22 in eine eigens vorgesehene Aufnahmestellung zu verbringen, ist daher nicht erforderlich. Bei dem Ausführungsbeispiel der Fig. 5 ist daher auf das in Fig. 1 angedeutete Zugelement ganz verzichtet worden. Der untere Haken 22 der Fig. 5 wird vielmehr direkt erfasst und wahlweise zwischen seiner Haltestellung und der Aufnahmestellung hin und her bewegt.

Abweichend von dem dargestellten Ausführungsbeispiel der Fig. 1 beschreibt das Formstück 21 für den unteren Haken 22 bei dem Ausführungsbeispiel der Fig. 5 eine gebogene, z. B. halbelliptische oder elliptische Bahnkurve, entlang welcher der untere Haken 22 beweglich ist. Der untere Haken 22 kann auch entlang dieser gebogenen Bahnkurve an unterschiedlichen Stellen arretiert werden, ähnlich wie dies bei den beiden oberen Haken 5 entlang den Langlöchern 8 möglich ist. Hierzu weist der untere Haken 22 einen Sockel 23 auf, der auch als Arretierung bezeichnet werden kann, und der innerhalb einer Vertiefung 24 des Formstücks 21 verschiebbar ist und mittels einer Klemmschraube 25 arretiert werden kann. Der Sockel 23 weist zwei Führungsschultern 28 auf, die den Außenhaken 12 bei seiner Schwenkbewegung führen.

Die Klemmschraube 25 durchsetzt ein gebogen verlaufendes Langloch 27, welches längs in der Vertiefung 24 verläuft. Sie legt allerdings nicht nur den gesamten Sockel 23 an einer gewählten Stelle am Formstück 21 fest, sondern bildet auch eine Achse, die senkrecht zur Fläche der Wand 4 ausgerichtet ist und um welche das Oberteil des Sockels 23 mitsamt dem Außenhaken 12 gegenüber einem Unterteil 26 des Sockels 23 frei drehbar ist. Wenn das Formstück 21 beispielsweise einen etwa V-förmigen Querschnitt aufweist, so kann dieses Unterteil 26 daran angepasst nach unten hin ebenfalls V-förmig ausgestaltet sein, so dass es dem Formstück 21 großflächig anliegt und in dem Langloch 27 verschoben werden kann, jedoch nicht um die Achse der Klemmschraube 25 gedreht werden kann.

Fig. 5 zeigt den unteren Haken 22 so ausgerichtet, dass der Außenhaken 12 annähernd in Längsrichtung der Vertiefung 24 weist und daher nahezu oder sogar vollständig in diese eintauchen kann, wenn er sich in seiner Tragestellung befindet.

## Patentansprüche

1. Gepäckstück (1) eines Fahrrad-Gepäckträgersystems, wobei das Fahrrad-Gepäckträgersystem einen an einem Fahrrad befestigten Gepäckträger aufweist,
der Gepäckträger eine Strebe aufweist und das Gepäckstück (1) einen von Wänden umschlossenen Innenraum und an einer Wand (4) einen Haken (5) aufweist,
und wobei der Haken (5) einen ersten, äußeren, von der Wand (4) weiter beabstandeten, als Außenhaken (12) bezeichneten Abschnitt aufweist,
sowie einen zweiten, inneren, der Wand (4) des Gepäckstücks (1) näheren, als Innenhaken (11) bezeichneten Abschnitt,
und wobei der Innenhaken (11) und der Außenhaken (12) gemeinsam in einer so genannten Haltestellung eine Öse bilden, welche die Strebe des Gepäckträgers umgreift,
und wobei der Innenhaken (11) aus der Haltestellung in eine Aufnahmestellung beweglich ist, derart, dass die freien Enden (18, 20) von Außenhaken (12) und Innenhaken (11) das Aufsetzen des Hakens (5) auf die Strebe ermöglichend voneinander beabstandet sind,
**dadurch gekennzeichnet,**
**dass** der Außenhaken (12) aus der Aufnahme- und Haltestellung in eine Tragestellung beweglich ist, in welcher das freie Ende (18) des Außenhakens (12) im Wesentlichen in der Ebene der Wand (4) des Gepäckstücks (1) oder innerhalb der vom Gepäckstück (1) umschlossenen Kontur angeordnet ist.

2. Gepäckstück nach Anspruch 1,
**dadurch gekennzeichnet,**
**dass** der Innenhaken (11) und der Außenhaken (12) um dieselbe Schwenkachse (10) schwenkbar gelagert sind.

3. Gepäckstück nach Anspruch 1 oder 2,
**dadurch gekennzeichnet,**
**dass** der Innenhaken (11) federbelastet dem Außenhaken (12) anliegt
und gegen die Federwirkung aus der Halte- oder Tragestellung in die Aufnahmestellung beweglich ist.

4. Gepäckstück nach einem der vorhergehenden Ansprüche,
**dadurch gekennzeichnet,**
**dass** im oberen Bereich des Gepäckstücks (1) zwei Haken (5) miteinander fluchtend angeordnet sind, derart, dass sie gemeinsam dieselbe Strebe des Gepäckträgers umgreifen und dass diese beiden Haken (5) eine liegende Strebe umgreifend ausgerichtet sind.

5. Gepäckstück nach Anspruch 4,
**dadurch gekennzeichnet,**
**dass** von den beiden Haken (5) wenigstens einer verschiebbar an der Wand (4) des Gepäckstücks (1) befestigt ist, derart, dass der Abstand zwischen den beiden Haken (5) veränderlich ist.

6. Gepäckstück nach Anspruch 5,
**dadurch gekennzeichnet,**
**dass** der verschiebbare Haken (5) in unterschiedlichen Schiebestellungen arretierbar ist.

7. Gepäckstück nach einem der vorhergehenden Ansprüche,
**dadurch gekennzeichnet,**
**dass** im unteren Bereich des Gepäckstücks (1) ein Haken (22) angeordnet und derart ausgerichtet ist, dass er eine aufrecht verlaufende Strebe des Gepäckträgers umgreift.

8. Gepäckstück nach einem der vorhergehenden Ansprüche ,
**dadurch gekennzeichnet,**
**dass** die Wand (4) des Gepäckstücks (1) einen Formbereich aufweist, der als zum Inneren des Gepäckstücks (1) geformte Einbuchtung ausgestaltet ist, und dass ein Haken (5, 22) wenigstens teilweise in der Einbuchtung angeordnet ist.

9. Gepäckstück nach Anspruch 8,
**dadurch gekennzeichnet,**
**dass** der Formbereich als separates Formstück (7) ausgestaltet ist, welches an der Wand (4) befestigt ist.

10. Gepäckstück nach Anspruch 9,
**dadurch gekennzeichnet,**
**dass** das Formstück (7) als Tiefzieh- oder Spritzgussteil ausgestaltet ist.

11. Gepäckstück nach Anspruch 7,
**dadurch gekennzeichnet,**
**dass** der untere Haken (22) entlang einer Führungsbahn beweglich ist und in unterschiedlichen Stellungen entlang der Führungsbahn arretierbar ist.

12. Gepäckstück nach Anspruch 11,
**dadurch gekennzeichnet,**
**dass** die Führungsbahn gebogen verläuft.

## Claims

1. Baggage section (1) of a bicycle baggage carrier system, where the bicycle baggage carrier system incorporates a baggage carrier fastened to a bicycle and incorporating a stay and the baggage section (1) incorporates an interior space enclosed by walls and a hook (5) on one wall (4),
and where the hook (5) incorporates a first, outer section set further at a distance from the wall (4) and described as an outer hook (12) and incorporates a second, inner section nearer to the wall (4) of the baggage section (1) and described as an inner hook (11) and where the inner hook (11) and the outer hook (12), when in a so-called holding position, together form an eye that grips the stay of the baggage carrier,
and where the inner hook (11) can be moved from the holding position into a receiving position such that the free ends (18, 20) of the outer hook (12) and the inner hook (11) are set a distance apart to enable the hook (5) to be placed on the stay,
**characterised in that** the outer hook (12) can be moved from the receiving and holding position into a carrying position in which the free end (18) of the outer hook (12) is disposed essentially in the same plane of the wall (4) of the baggage section (1) or inside the contour enclosed by the baggage section (1).

2. Baggage section in accordance with claim 1, **characterised in that** the inner hook (11) and the outer hook (12) are supported so as to able to be pivoted about the same pivot axis (10).

3. Baggage section in accordance with claim 1 or 2, **characterised in that** the inner hook (11) lies against the outer hook (12) under spring load and can be moved out of the holding or carrying position into the receiving position against the action of the spring.

4. Baggage section in accordance with any one of the foregoing claims, **characterised in that** in the upper part of the baggage section (1) two hooks (5) are disposed level with each other such that they grip the same stay of the baggage carrier and that these two hooks (5) are aligned so as to grip a horizontal stay.

5. Baggage section in accordance with claim 4, **characterised in that** of the two hooks (5) at least one is displaceably fastened to the wall (4) of the baggage section (1) such that the distance between the two hooks (5) can be changed.

6. Baggage section in accordance with claim 5, **characterised in that** the displaceable hook (5) can be locked in different shifting positions.

7. Baggage section in accordance with any one of the foregoing claims, **characterised in that** a hook (22) is arranged in the lower part of the baggage section (1) and aligned such that it grips a vertically oriented stay of the baggage carrier.

8. Baggage section in accordance with any one of the foregoing claims, **characterised in that** the wall (4) of the baggage section (1) incorporates a shaped zone that is designed as a recess formed towards the interior of the baggage section (1) and that a hook (5, 22) is at least partly disposed in the recess.

9. Baggage section in accordance with claim 8, **characterised in that** the shaped zone is designed as a separate shaped part (7) that is fastened to the wall (4).

10. Baggage section in accordance with claim 9, **characterised in that** the shaped part (7) is designed as a deep-drawn- or injection-moulded part.

11. Baggage section in accordance with claim 7, **characterised in that** the lower hook (22) can be moved along a guideway and can be locked in different positions along the guideway.

12. Baggage section in accordance with claim 11, **characterised in that** the guideway is made to run in a curve.

## Revendications

1. Bagage (1) d'un système de porte-bagage de vélo, sachant que le système de porte-bagage de vélo présente un porte-bagage fixé contre un vélo, que le porte-bagage présente un renfort et que le bagage (1) présente un volume intérieur délimité par des parois, et qu'il présente un crochet (5) contre une paroi (4),
et sachant que le crochet (5) présente un premier segment extérieur appelé crochet extérieur (12) un peu plus distant de la paroi (4), ainsi qu'un deuxième segment intérieur appelé crochet intérieur (11) et situé un peu plus près de la paroi (4) du bagage (1), et sachant que le crochet intérieur (11) et le crochet extérieur (12) forment ensemble, dans une position dite de retenue, un anneau qui enserre le renfort du porte-bagage,
et sachant que le crochet intérieur (11) est déplaçable de la position de retenue vers une position de réception, de sorte que les extrémités (18, 20) du crochet extérieur (12) et du crochet intérieur (11) se trouvent à une distance l'une de l'autre qui permet de poser le crochet (5) sur le renfort,
**caractérisé en ce que** le crochet extérieur (12) est déplaçable de la position de réception et de retenue vers une position de port dans laquelle l'extrémité libre (18) du crochet extérieur (12) est disposée essentiellement dans le plan de la paroi (4) du bagage (1) ou à l'intérieur du contour délimité par le bagage (1).

2. Bagage selon la revendication 1, **caractérisé en ce que** le crochet intérieur (11) et le crochet extérieur (12) sont en appui pivotant autour du même axe de pivotement (10).

3. Bagage selon la revendication 1 ou 2, **caractérisé en ce que** le crochet intérieur (11) applique sous contrainte ressort contre le crochet extérieur (12) et qu'il est déplaçable, en vainquant l'effet du ressort, de la position de retenue ou de port vers la position de réception.

4. Bagage selon l'une des revendications précédentes, **caractérisé en ce que** dans la zone supérieure du bagage (1) sont disposés deux crochets (5) en alignement réciproque de sorte qu'ils enserrent ensemble le même renfort du porte-bagage et que ces deux crochets (5) sont orientés de manière à enserrer un renfort horizontal.

5. Bagage selon la revendication 4, **caractérisé en ce que** des deux crochets (5) au moins un est fixé de manière coulissante contre la paroi (4) du bagage (1), de sorte que l'écart entre les deux crochets (5) est modifiable.

6. Bagage selon la revendication 5, **caractérisé en ce que** le crochet coulissant (5) peut être verrouillé dans différentes position de coulissement.

7. Bagage selon l'une des revendications précédentes, **caractérisé en ce que** dans la zone inférieure du bagage (1) est disposé un crochet (22) orienté de telle manière qu'il enserre un renfort au tracé vertical du porte-bagage.

8. Bagage selon l'une des revendications précédentes, **caractérisé en ce que** la paroi (4) du bagage (1) présente une zone formée configurée en creux en direction de l'intérieur du bagage (1), et qu'un crochet (5, 22) est disposé au moins en partie dans le creux.

9. Bagage selon la revendication 8, **caractérisé en ce que** la zone formée est configurée comme pièce formée (7) séparée qui est fixée contre la paroi (4).

10. Bagage selon la revendication 9, **caractérisé en ce que** la pièce formée (7) est configurée comme pièce emboutie ou moulée par injection.

11. Bagage selon la revendication 7, **caractérisé en ce que** le crochet inférieur (22) est déplaçable le long d'une piste de guidage et qu'il est possible de le verrouiller sur différentes positions le long de cette piste.

12. Bagage selon la revendication 11, **caractérisé en ce que** la piste de guidage présente un tracé incurvé.
